# EUROPÄISCHE PATENTSCHRIFT

(11) **EP 2 852 510 B1**
(45) Veröffentlichungstag und Bekanntmachung des Hinweises auf die Patenterteilung: **20.04.2016**
(21) Anmeldenummer: 13725121.1
(22) Anmeldetag: 17.05.2013
(51) Int. Cl.: B60N 2/235, G05G 1/015, B60N 2/44

(54) **BESCHLAG FÜR EINEN FAHRZEUGSITZ UND FAHRZEUGSITZ**
RECLINER FOR A VEHICLE SEAT AND VEHICLE SEAT
FERRURE POUR SIÈGE DE VÉHICULE ET SIÈGE DE VÉHICULE

(30) Priorität: 22.05.2012 DE 102012010402
(43) Veröffentlichungstag der Anmeldung: 01.04.2015
(73) Patentinhaber: Johnson Controls Components GmbH & Co. KG, 67657 Kaiserslautern (DE)
(72) Erfinder: TEUFEL, Ingo, 67806 Rockenhausen (DE); REIMER, Peter, 67305 Ramsen (DE); ASSMANN, Uwe, 42855 Remscheid (DE); PETERS, Christoph, 42929 Wermelskirchen (DE)
(74) Vertreter: Liedhegener, Ralf
(86) Internationale Anmeldenummer: PCT/EP2013/060280
(87) Internationale Veröffentlichungsnummer: WO 2013/174756

(56) Entgegenhaltungen:
- DE-A1-102005 031 918
- US-A1- 2009 322 137

## Beschreibung

Beschlag für einen Fahrzeugsitz und Fahrzeugsitz Die Erfindung betrifft einen Beschlag für einen Fahrzeugsitz mit den Merkmalen des Anspruchs 1 sowie einen Fahrzeugsitz mit den Merkmalen des Anspruchs 15.

### Stand der Technik

Aus der DE 10 2011 010 699 A1 ist ein Beschlag mit einem Indikator bekannt. Ein radial abstehender Zeiger eines drehfest mit einem Mitnehmer des Beschlags verbundenen Indikators zeigt die Winkellage des Mitnehmers und damit des Exzenters an, welche wiederum ein Maß dafür ist, ob die vom Exzenter beaufschlagten Riegel radial außen oder radial innen sind, d.h. der Beschlag verriegelt oder entriegelt ist. Aufgrund des inneren Aufbaus des Beschlages unterscheiden sich die Winkellagen des Mitnehmers und damit die Winkellagen des Indikators zwischen einem verriegelten und einem entriegelten Zustand des Beschlages nur geringfügig. Insbesondere wenn die Verzahnungen von dem Zahnkranz und den Riegeln "Kopf auf Kopf" stehen und diese somit nicht in einem verriegeltem Zahneingriff miteinander sind, ist die Winkeländerung des Zeigers gegenüber dem verriegelten Zustand visuell kaum wahrnehmbar. Der Zeiger eignet sich somit nur bedingt als Nichtverriegelungsanzeige des Beschlages.

Aus der DE 10 2008 047 901 A1 ist ein elektromotorisch betätigter Beschlag bekannt, dessen Verriegelungszustand durch einen Sensor abgefragt wird. Der Sensor ist mittels einer Sensorklammer an dem Beschlag befestigt und sensiert anhand der Winkellage eines Nockens, ob ein Sperrmechanismus des Beschlages zu einer unverriegelten Position bewegt wurde. Nachteilig ist, dass eine solche Lösung eine Sensorklammer erfordert, die zusätzlichen Bauraum bedingt und Mehrkosten und Mehrgewicht mit sich bringt. Zudem lässt sich eine solche Sensoranordnung nicht einfach auf manuell entriegelbare Beschläge übertragen. Einen Beschlag für einen Fahrzeugsitz ohne Indikator und ohne Sensor offenbart die DE 10 2006 015 560 B3.

Die DE102010025112 A1 zeigt einen Beschlag mit einem Indikator und einem Adapter. Aufgabe Der Erfindung liegt die Aufgabe zu Grunde, einen Beschlag der eingangs genannten Art zu verbessern, insbesondere eine sichere und eindeutige Nichtverriegelungsanzeige für einen manuell betätigbaren Beschlag bereit zu stellen, die zudem kosten- und gewichtsoptimiert ist. Der Erfindung liegt des Weiteren die Aufgabe zu Grunde, einen Fahrzeugsitz mit einem solchen Beschlag zur Verfügung zu stellen.

### Lösung

Diese Aufgabe wird erfindungsgemäß durch einen Beschlag mit den im Anspruch 1 genannten Merkmalen sowie einen Fahrzeugsitz nach Anspruch 15 gelöst.

Vorteilhafte Ausgestaltungen, welche einzeln oder in Kombination miteinander eingesetzt werden können, sind Gegenstand der Unteransprüche.

Indem ein mit einem Bedienhebel verbundener Adapter drehbar an dem Mitnehmer oder an einem an dem Mitnehmer befestigten Befestigungsring gelagert ist, der Adapter mittels einer Rückstellfeder unabhängig vom Verriegelungszustand des Beschlages in eine Ausgangslage zurückgestellt wird, wenn der Bedienhebel unbetätigt ist und der Sensor an dem Adapter befestigt ist, kann auf ein zusätzliches Bauteil zu Befestigung des Sensors in einem Bereich des Beschlages, in dem nur wenig Bauraum zur Verfügung steht, verzichtet werden. Der Bedienhebel ist im unbetätigten Zustand immer in seiner Ausgangslage, so dass der über den Adapter kinematisch an den Bedienhebel gekoppelte Sensor den Verriegelungszustand immer richtig und zuverlässig erfasst.

Dadurch, dass der mit dem Beschlag verbundene Sensor eine Positionsänderung des Indikators erfasst und in ein elektrisches Ausgangssignal umwandelt, können auch kleine Änderungen der Indikatorposition zuverlässig erfasst und in ein elektrisches oder elektronisches Signal umgewandelt werden.

Besonders einfach ist die Erfindung in Beschläge zu integrieren, deren Riegel zum Entriegeln des Beschlages von einer mit dem Exzenter oder dem Mitnehmer verbundenen Steuerscheibe radial nach innen gezogen werden, deren Exzenter drehfest mit dem Mitnehmer verbunden ist und deren Exzenter beim Entriegeln des Beschlags aus einer Ausgangswinkellage gedreht wird und im entriegelten Zustand des Beschlages durch mindestens einen der Riegel gegen ein vollständiges Zurückschwenken in die Ausgangswinkellage gesichert ist. Bei solchen Beschlägen ist die Winkellage des Mitnehmers eine eindeutige Funktion des Verriegelungszustandes des Beschlags.

Bei Sitzen einer zweiten Sitzreihe kann mittels eines Freischwenkens der Lehne des vorderen Sitzes der Zugang zu der hinteren Sitzreihe erleichtert werden, wofür die entriegelte Lehne aus einer der Gebrauchsstellungen nach vorne in eine nicht zum Sitzgebrauch geeignete, freigeschwenkte Stellung geschwenkt wird. Es erhöht den Bedienkomfort, wenn der Bedienhebel nicht während des gesamten Freischwenkens gehalten werden muss. Dazu kann in dem Beschlag ein an sich bekanntes Freischwenk-Steuerelement vorgesehen werden. Der Beschlag kann dadurch einen entriegelten Zustand einnehmen, auch wenn der Bedienhebel unbetätigt ist.

Dadurch dass der Mitnehmer über eine Profilverbindung mit einer Übertragungsstange verbunden ist und in Entriegelungsrichtung von der Übertragungsstange antreibbar ist, aber entgegen der Entriegelungsrichtung ein Spiel in der Profilverbindung eine begrenzte Winkelbeweglichkeit zwischen dem Mitnehmer und der Übertragungsstange ermöglicht, kann die Übertragungsstange und ein mit dieser wirkverbundener Bedienhebel auch dann in eine Ausgangslage zurückdrehen, wenn der Mitnehmer aufgrund eines unverriegelten Zustands des Beschlags nicht zurückdrehen kann.

Ein drehbar an dem Mitnehmer oder an einem daran befestigten Befestigungsring gelagerter Adapter, der mittels einer Rückstellfeder unabhängig vom Verriegelungszustand des Beschlages in eine Ausgangslage zurückgestellt wird, wenn der Bedienhebel unbetätigt ist, eignet sich besonders zur Anbringung des Sensors. Vorzugsweise ist der Adapter dabei drehfest mit der Übertragungsstange und dem Bedienhebel verbunden.

Adapter und Bedienhebel können einteilig ausgeführt sein. Der Bedienhebel ist dann teil des Adapters und der Sensor dadurch am Bedienhebel befestigt.

Der Indikator kann in einfacher weise an den Mitnehmer, insbesondere an den Befestigungsring des Mitnehmers montiert werden, wenn der Indikator ein Profil aufweist, das in axialer Richtung auf ein Profil des Mitnehmers oder des Befestigungsrings des Mitnehmers aufgeschoben werden kann und dadurch zu eine drehfeste Verbindung zwischen dem Indikator und dem Mitnehmer gebildet wird.

Der Indikator ist vorzugsweise axial zwischen dem zweiten Beschlagteil und dem Adapter angeordnet. An dieser Stelle ist der Indikator vor Beschädigungen geschützt.

Einfach aufgebaut und somit preiswert sind Sensoren, die eine federnde und elektrisch leitfähige Kontaktzunge und eine elektrisch leitfähige Kontaktfläche umfassen. Bei einem unverriegelten Beschlag drückt eine Schaltfläche des Indikators die Kontaktzunge auf die Kontaktfläche und schließt dadurch einen Stromkreis.

Die Kosten und das Gewicht des Beschlages lassen sich weiter reduzieren, wenn der Sensor, zumindest aber dessen Kontaktzunge, als Insert-Bauteil in den Adapter integriert ist.

Besonders geeignet sind Mikroschalter als Sensoren, da diese in vielfältigen Ausführungsformen verfügbar sind.

Die Positionsänderung des Indikators als Eingangssignal, das vom Sensor erfasst wird, ist vorzugsweise eine Winkeländerung, könnte jedoch bei Verwendung von Zwischengetrieben, die eine Drehbewegung des Mitnehmers in eine Linearbewegung umwandeln, auch eine Wegänderung sein.

Die Signalwandlung basiert vorzugsweise auf einer Berührung zwischen Sensor und Indikator, kann jedoch mit gutem Ergebnis auch berührungslos, induktiv, kapazitiv oder ohmsch ausgeführt sein.

Das Ausgangssignal des Sensors, dass von einer Auswerteelektrik oder Auswerteelektronik weiter verarbeitet wird, kann ein Strom, eine Stromänderung, eine Spannung, eine Spannungsänderung oder eine Kombination aus den vorgenannten Größen sein. Die Nichtverriegelung wird vorteilhaft genau dann angezeigt, wenn ein Stromkreis unterbrochen wird. Mit entsprechender Abwandlung der Auswerteelektrik / -elektronik kann die Nichtverriegelung jedoch auch nur dann angezeigt, wenn der Stromkreis geschlossen ist.

Ein Fahrzeugsitz mit einem erfindungsgemäßen Beschlag ist funktionssicher sowie vergleichsweise leicht und kostengünstig.

### Figuren und Ausführungsformen der Erfindung

Im Folgenden ist die Erfindung anhand eines in den Zeichnungen dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Seitenansicht eines Fahrzeugsitzes,
- Fig. 2:: eine perspektivische Seitenansicht des Ausführungsbeispiels, teilweise in Explosionsdarstellung,

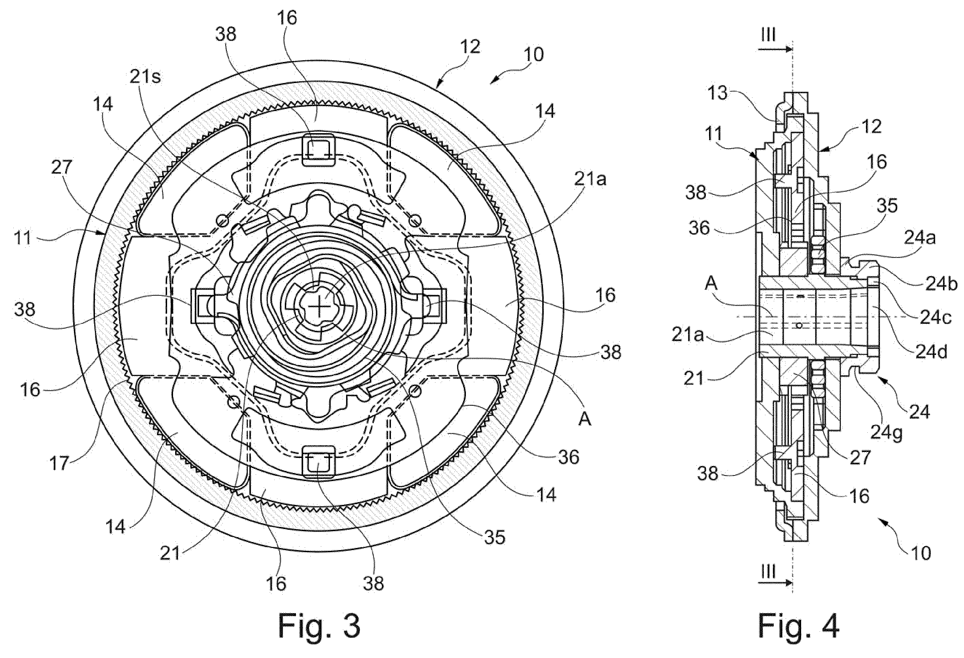

- Fig. 3:: einen Schnitt in radialer Richtung durch einen Beschlag entlang der Linie III-III in Fig. 4,
- Fig. 4:: einen Schnitt in axialer Richtung durch den Beschlag,
- Fig. 5:: eine Detailansicht des Befestigungsrings,
- Fig. 6:: eine Seitenansicht des Fahrzeugsitzes im Bereich des Beschlags ohne Adapter und Bedienhebel bei verriegeltem Beschlag,
- Fig. 7:: eine Fig. 6 entsprechende Ansicht mit Adapter und Bedienhebel bei verriegeltem Beschlag,
- Fig. 8:: eine Fig. 6 entsprechende Ansicht mit Adapter und ohne Bedienhebel bei verriegeltem Beschlag,
- Fig. 9:: eine Fig. 8 entsprechende Ansicht während der Entriegelung des Beschlags und
- Fig. 10:: eine Fig. 8 entsprechende Ansicht bei entriegeltem Beschlag ("Kopf auf Kopf-Stellung") und unbetätigtem Entriegelungshebel.

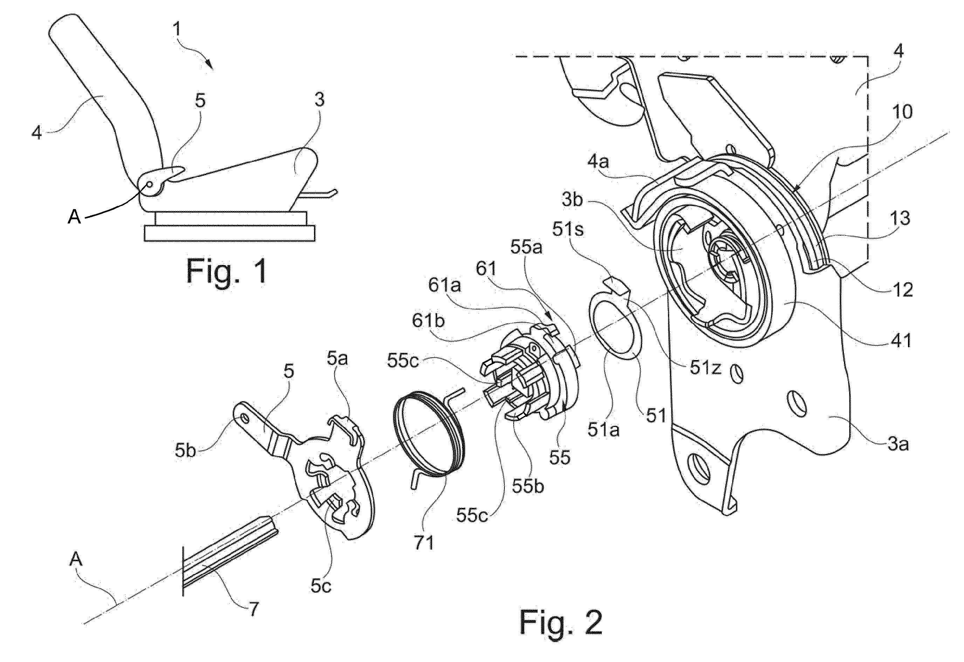

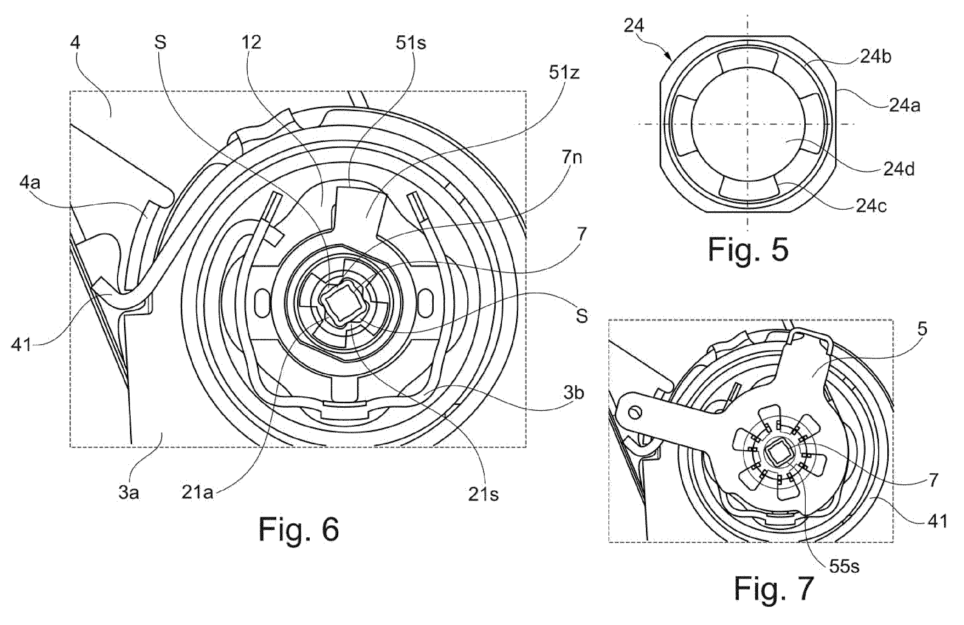

Ein Fahrzeugsitz 1 für ein Kraftfahrzeug weist ein Sitzteil 3 und eine relativ zum Sitzteil 3 in ihrer Neigung einstellbare Lehne 4 auf. Zur Entriegelung und Neigungseinstellung der Lehne 4 wird manuell, beispielsweise mittels eines Bedienhebels 5, eine Übertragungsstange 7 gedreht, welche horizontal im Übergangsbereich zwischen Sitzteil 3 und Lehne 4 angeordnet ist. Auf einer der beiden Seiten des Fahrzeugsitzes 1 greift die Übertragungsstange 7 in einen Beschlag 10 ein. Auf der anderen Seite ist die Übertragungsstange 7 in einem Drehlager zwischen Sitzteil 3 und Lehne 4 gelagert. An beiden Enden der Übertragungsstange 7, also auf beiden Seiten des Fahrzeugsitzes 1 ist jeweils ein Bedienhebel 5 vorgesehen. Vorliegend ist an einem Haken 5a des Bedienhebels 5 eine Zuglasche angebracht. Ein Einhängeloch 5b ermöglicht zur zusätzlichen oder alternativen Betätigung des Beschlags 5 das Einhängen eines ersten Seilzugendes. Das zweite Seilzugende kann an einem weiteren Bedienelement angebracht sein, beispielsweise im Bereich des Lehnenkopfes. Der in den Figuren 1, 2 und 7 dargestellte Bedienhebel 5 wird zum Entriegeln des Beschlages 10 entgegen dem Uhrzeigersinn betätigt.

In einer Abwandlung des Ausführungsbeispiels ist nur genau ein Bedienhebel 5 vorgesehen, wobei dieser entweder auf das dem Beschlag 10 zugeordnete Ende oder das dem Drehlager zugeordnete Ende der Übertragungsstange 7 wirkt.

Der Beschlag 10 weist ein erstes Beschlagteil 11 und ein zweites Beschlagteil 12 auf, welche relativ zueinander um eine Achse A verdrehbar sind. Die (gedachte) Achse A fluchtet vorliegend mit der Achse der Übertragungsstange 7 und definiert die verwendeten Richtungsangaben eines Zylinderkoordinatensystems. Die beiden Beschlagteile 11 und 12 lassen sich jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Der Umklammerungsring 13 besteht vorzugsweise aus Metall, insbesondere Stahl, der vorzugsweise ungehärtet ist. Der Umklammerungsring 13 weist vorzugsweise eine im wesentlichen flache Ringform auf, kann aber in alternativer Ausführung L-förmig profiliert mit einem Zylinderabschnitt und stirnseitig einem flachen Ringabschnitt sein.

Der Umklammerungsring 13 ist fest mit einem der beiden Beschlagteile 11 und 12 verbunden, vorliegend in einem äußeren Ringabschnitt mit dem zweiten Beschlagteil 12, beispielsweise mittels Laserschweißens oder mittels einer anderen an sich bekannten Befestigungstechnik. Mittels eines inneren Ringabschnittes, welcher in einer zu axialen Richtung senkrechten Ebene angeordnet ist, übergreift der Umklammerungsring 13, gegebenenfalls unter Zwischenlage eines Gleitrings, das erste Beschlagteil 11 in dessen radial äußerem Randbereich, ohne die Relativbewegung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, ist also lehnenfest. Das zweite Beschlagteil 12 ist mit einem Sitzteiladapter 3a fest verbunden, der fest mit der Struktur des Sitzteils 3 verschraubt ist. Das zweite Beschlagteil 12 ist also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne 4 und Sitzteil 3.

Der Beschlag 10 ist als Rastbeschlag ausgebildet, bei welchem das erste Beschlagteil 11 und das zweite Beschlagteil 12 miteinander verriegelbar sind, wie es beispielsweise in der DE 10 2006 015 560 B3 beschrieben ist.

Das zweite Beschlagteil 12 weist - vorliegend vier - Führungssegmente 14 auf, welche mit geraden Führungsflächen paarweise jeweils einen Riegel 16 seitlich in radialer Richtung führen. Die - vorliegend insgesamt vier - Riegel 16 sind - vorliegend um je 90° - versetzt zueinander in einem zwischen den beiden Beschlagteilen 11 und 12 definierten Bauraum angeordnet. Die Riegel 16 sind an ihrem radial außen liegenden Ende mit einer Verzahnung versehen, die mit einem Zahnkranz 17 des als Hohlrad ausgebildeten ersten Beschlagteils 11 in Eingriff gelangen (einfallen) kann. Wenn der Zahnkranz 17 und die Riegel 16 zusammenwirken, ist der Beschlag 10 verriegelt.

Das erste Beschlagteil 11 ist in einer Vertiefung des zweiten Beschlagteils 12 angeordnet und wird durch dieses radial außen übergriffen, wodurch die beiden Beschlagteile 11 und 12 einander lagern. Dabei ist der radial äußere Randbereich des ersten Beschlagteils 11 mit dem Zahnkranz 17 in radialer Richtung zwischen den Führungssegmenten 14 und dem (der Lagerung des ersten Beschlagteils 11 dienenden) radial äußeren Randbereich des zweiten Beschlagteils 12 angeordnet. Bei hohen Belastungen, beispielsweise im Crashfall, kann das erste Beschlagteil 11 - nach einer Verformung - mit seinem Zahnkranz 17 in Anlage an die in Lastrichtung näher gelegenen Führungssegmente 14 kommen, welche in Richtung zum Zahnkranz 17 entsprechend (konzentrisch) gekrümmte Flächen aufweisen. Dies erhöht die Festigkeit des Beschlags 10.

Im Zentrum des Beschlags 10 ist ein Mitnehmer 21 angeordnet, beispielsweise aus Kunststoff, welcher drehbar an wenigstens einem der beiden Beschlagteile 11 und 12, vorliegend an dem ersten Beschlagteil 11, gelagert ist, genauer gesagt in einer zentralen Öffnung desselben. Der Mitnehmer 21 weist in axialer Richtung ein zum Zusammenwirken mit der Übertragungsstange 7 ausgebildetes Profilloch 21 a auf. Die zylinderförmige Grundform des Profillochs 21 a ist durch vier in axialer Richtung ausgerichtete, radial nach innen weisende Stege 21s unterbrochen, die gleichmäßig über den Umfang des Profillochs 21 a verteilt sind. Die Übertragungsstange 7 weist ein Gegenprofil mit vier gleichmäßig über den Umfang der Übertragungsstange 7 verteilten Nuten 7n auf. Jeder der vier Stege 21 s liegt in Umfangsrichtung und in Betätigungsrichtung des Bedienhebels 5, also in Entriegelungsrichtung des Beschlags 10, an jeweils einer Nut 7n an. Eine Drehbewegung der Übertragungsstange 7 wird somit auf den Mitnehmer 21 übertragen. Zum Zwecke des Toleranzausgleichs und um ein Zurückdrehen des Betätigungshebels 5 in dessen Ausgangslage auch bei entriegeltem Beschlag zu ermöglichen, ist ein Spiel S zwischen den Nuten 7n und den Stegen 21 s entgegen der Betätigungsrichtung des Bedienhebels 5 in der Profilverbindung vorhanden. Hierfür weisen die Stege 21 s eine in Umfangsrichtung geringere Breite als die Nuten 7n auf.

An einem Ende des Mitnehmers 21, vorliegenden an demjenigen Ende, das im Bereich des zweiten Beschlagteils 12 angeordnet ist, ist ein Befestigungsring 24 vorgesehen, welcher vorliegend aus Kunststoff besteht und vorzugsweise mittels Ultraschallschweißens an dem Mitnehmer 21 befestigt ist.

Auf dem Mitnehmer 21 sitzt drehfest ein Exzenter 27, welcher in dem zwischen den Beschlagteilen 11 und 12 definierten Bauraum angeordnet ist. Eine Federanordnung 35, beispielsweise eine oder zwei ineinander geschachtelte Spiralfedern, ist in einer zentralen Aufnahme eines der beiden Beschlagteile 11 und 12, vorliegend des zweiten Beschlagteils 12, angeordnet und vorliegend außen abgestützt. Die Federanordnung 35 beaufschlagt den Exzenter 27, vorliegend indem sie innen drehfest auf dem Mitnehmer 21 sitzt. Eine derartige Federanordnung 35 ist beispielsweise in der DE 10 2005 046 807 B3 beschrieben.

Der von der Federanordnung 35 beaufschlagte Exzenter 27 wirkt auf die radial beweglichen Riegel 16 ein und beaufschlagt diese, so dass sie radial nach außen gedrückt werden, um in den Zahnkranz 17 einzufallen, womit der Beschlag 10 verriegelt ist.

Eine Steuerscheibe 36 ist im zwischen den Beschlagteilen 11 und 12 definierten Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Bei einer Drehung (um wenige Grad) des Mitnehmers 21 - und des damit angetriebenen Exzenters 27 und der Steuerscheibe 36 - entgegen der Kraft der Federanordnung 35 zieht die Steuerscheibe 36 die Riegel 16 radial nach innen, d.h. aus dem Zahnkranz 17, womit der Beschlag 10 entriegelt ist und die beiden Beschlagteile 11 und 12 relativ zueinander um die Achse A verdrehbar sind. Die Lehne 4 ist nun um die Achse A schwenkbar, um ihre Neigung einzustellen, d.h. um eine andere Gebrauchsstellung einzunehmen. Im entriegelten Zustand des Beschlags 10 verhindern die radial nach innen gezogenen Riegel 16 ein Zurückdrehen des Exzenters 27, indem mindestens ein radial nach außen abstehender Nocken des Exzenters 27 gegen mindestens einen der Riegel 16 anläuft. Somit kann auch der drehfest mit dem Exzenter 27 verbundene Mitnehmer 21 nicht in seine Ausgangsstellung zurückdrehen.

Bei zweitürigen Kraftfahrzeugen oder bei Sitzen einer zweiten Sitzreihe kann mittels eines Freischwenkens der Lehne 4 der Zugang zu einer hinteren Sitzreihe erleichtert werden, wofür die entriegelte Lehne 4 aus einer der Gebrauchsstellungen nach vorne in eine nicht zum Sitzgebrauch geeignete, freigeschwenkte Stellung geschwenkt wird. Es erhöht den Bedienkomfort, wenn der Bedienhebel 5 - oder ein über das Einhängeloch 5b mit diesem verbundenes weiteres Betätigungselement - nicht während des gesamten Freischwenkens gehalten werden muss und die Beschläge trotzdem erst in der freigeschwenkten Stellung verriegeln. Im Beschlag 10 kann hierfür zwischen der Steuerscheibe 36 und dem ersten Beschlagteil 11 um die Achse A herum optional ein ringförmiges Freischwenk-Steuerelement vorgesehen werden, wie es beispielsweise in der DE 10 2006 015 560 B3 beschrieben ist.

Der Beschlag 10, die Übertragungsstange 7 und der Bedienhebel 5 sind Teile eines Beschlagsystems, zu welchem vorzugsweise noch eine spiralförmige Lehnenkompensationsfeder 41 gehört, die im Bereich des Beschlags 10 angeordnet ist. Ein erstes, radial äußeres Federende der Lehnenkomensationsfeder 41 ist an einer Abstützlasche 4a der Lehne 4 abgestützt. Ein zweites, radial inneres Federende der Lehnenkomensationsfeder 41 ist an einem an dem Sitzteil 3 angebrachten Federadapter 3b abgestützt. Die Lehnenkomensationsfeder 41 kompensiert die Gewichtskraft der in Gebrauchsposition gegenüber der Vertikalen nach hinten geneigten Lehne 4 und des an der Lehne 4 angelehnten Insassen. Die Übertragungsstange 7 ist zwischen dem Beschlag 10 auf der ersten Fahrzeugsitzseite und dem (in den Figuren nicht dargestellten) Drehlager auf der zweiten Fahrzeugsitzseite angeordnet. In einer Abwandlung des Ausführungsbeispiels ist das Drehlager durch einen zweiten Beschlag 10 ersetzt. Die Übertragungsstange 7 ist dann zwischen den beiden Beschlägen 10 angeordnet und greift beidseitig in diese ein.

Der Befestigungsring 24 des Beschlags 10 weist mehrere, vorliegend vier, verschiedene Funktionsbereiche auf. Unmittelbar axial benachbart zum zweiten Beschlagteil 12 weist der Befestigungsring 24 ein Außenprofil 24a auf, vorliegend ein Vierkant mit abgerundeten Ecken, welches umlaufend auf einer radial abstehenden Materialpartie ausgebildet ist. An dem vom zweiten Beschlagteil 12 abgewandten, freien Ende weist der Befestigungsring 24 einen Bund 24b auf, welcher ebenfalls radial absteht. Radial innerhalb des Bundes 24b ist ein Innenprofil 24c ausgebildet, beispielsweise eine umlaufende Wellenform oder ein Keilprofil. Das Innenprofil 24c ist eine Schnittstelle für mögliche weitere Anbauteile, vorliegend jedoch ohne Funktion. Radial innen ist der hohle Befestigungsring 24 mit einem Durchlass 24d versehen, in welchen der Mitnehmer 21 teilweise eingeführt ist und durch den die vom Mitnehmer 21 umschlossene Übertragungsstange 7 relativ beweglich verläuft.

Das Außenprofil 24a ist auf der ersten Fahrzeugsitzseite zum drehfesten Zusammenwirken mit einem als Signalgeber wirkenden Indikator 51 vorgesehen. Der Indikator 51 ist ein Ring mit einem radial abstehenden Zeiger 51z, an dessen radial äußerem Ende eine Schaltfläche 51s in axialer Richtung umgestellt ist. Der Ring des Indikators 51 weist an seiner Innenseite ein zum Außenprofil 24a passendes, vorzugsweise formschlüssig zusammenwirkendes Profil 51 a auf. Der Indikator 51 gibt die Winkellage des Mitnehmers 21 und damit des Exzenters 27 an, welche wiederum ein Maß dafür ist, ob die vom Exzenter 27 beaufschlagten Riegel 16 radial außen oder radial innen sind, d.h. der Beschlag 10 verriegelt oder entriegelt ist.

Axial zwischen dem Außenprofil 24a und dem Bund 24b ist an dem Befestigungsring 24 eine Rille 24g ausgebildet, welche beispielsweise gegenüber dem Bund 24b 1 mm tief ist. Der Bund 24b ist Bestandteil einer in axialer Richtung wirkenden Clipsverbindung zwischen dem Befestigungsring 24 und einem weiteren, aufzuclipsenden Bauteil. Aufgrund der Rille 24g kann der Bund 24b hintergriffen werden, um die Clipsverbindung zu schaffen. Das aufzuclipsende Bauteil, welches Geometrien zum Zusammenwirken mit dem Bund 24b aufweist, ist vorliegend ein Adapter 55, der vorzugsweise aus Kunststoff ausgebildet ist. Der Adapter 55 hat eine ringförmige Grundgeometrie mit einer zentralen Öffnung 55d, durch die die Übertragungsstange 7 axial beweglich hindurchgeführt ist, aber drehfest mit dem Adapter 55 verbunden ist. Die zentrale Öffnung 55d weist dazu eine Profilform mit vier Profilstegen 55s auf, die eine zu dem Profil der Übertragungsstange 7 in beide Drehrichtungen drehfeste Verbindung bildet. Der Adapter 55 weist zusätzlich Geometrien zur festen Verbindung mit dem Bedienhebel 5 und zur axialen Sicherung des Befestigungsringes 24 an dem Beschlag 10 auf.

Mehrere in axialer Richtung zum Beschlag 10 hin orientierte erste Clipshaken 55a des Adapters 55 weisen jeweils eine radial nach innen weisende Hakennase auf und hintergreifen mit diesen Hakennasen den Bund 24b des Befestigungsrings 24 und befestigen den Adapter 55 in axialer Richtung an dem Befestigungsring 24. Dadurch ist der Adapter 55 drehbar, aber axial gesichert an dem Befestigungsrings 24 gelagert.

Der Adapter 55 ist auf seiner vom Beschlag 10 abgewandten Seite drehfest mit dem Bedienhebel 5 verbunden. Dazu weist der Adapter 55 umlaufend sechs Zentrierarme 55b auf, die in axialer Richtung vom Beschlag 10 weg weisen. In den Zwischenräumen zwischen den einzelnen Zentrierarmen 55b sind zusätzlich sechs gegenüber den Zentrierarmen 55b radial etwas nach innen versetzte zweite Clipshaken 55c vorgesehen. An dem Bedienhebel 5 sind in axialer Richtung sechs Clipsarme 5c vorgesehen, die jeweils in die Zwischenräume zwischen zwei Zentrierarme 55b greifen und mit den Clipshaken 55c verclipsen. Alternativ können der Bedienhebel 5 und der Adapter 55 einstückig miteinander ausgebildet sein.

Eine zwischen dem Adapter 55 und dem Federadapter 3b des Sitzteiladapters 3a wirkende Rückstellfeder 71 beaufschlagt den Adapter 55 mit einem Drehmoment, das den Adapter 55 und den an diesem befestigten Bedienhebel 5 in Richtung seiner unbetätigten Ausgangslage vorspannt. Dadurch und aufgrund des Spiels S in der Profilverbindung zwischen der Übertragungsstange 7 und dem Mitnehmer 21 dreht der Adapter 55 und der daran befestigte Betätigungshebel 5 in seine Ausgangslage zurück, sobald er vom Benutzer nicht betätigt wird.

Der Adapter 55 weist auf seiner Außenumfangsfläche einen Sensor 61 auf, der eine Positionsänderung des Indikators 51 erfasst und in ein elektrisches Ausgangssignal umwandelt. Der Sensor 61 besteht vorliegend aus einer federnd an dem Adapter 55 angebundenen, elektrisch leitfähigen Kontaktzunge 61 a und einer insbesondere fest an dem Adapter 55 angebundenen, elektrisch leitfähigen Kontaktfläche 61 b, die Teil eines Stromkreises sind. Liegt die Kontaktzunge 61 a an der Kontaktfläche 61 b an, so ist der Stromkreis geschlossen. Die Kontaktzunge 61 a und die Kontaktfläche 61 b sind dazu jeweils - insbesondere über ein isoliertes Stromkabel - mit einer in den Figuren nicht dargestellten, aber allgemein bekannten elektrischen Steckverbindung verbunden. Die Steckverbindung koppelt den Sensor 61 an ein im Fahrzeugsitz vorhandenes elektromechanisches Anzeigeelement einer Nichtverriegelungsanzeige oder an die Fahrzeugelektrik bzw. - elektronik, die wiederum eine Stromkreisunterbrechung auswertet und eine Nichtverriegelungsanzeige, z.B. im Amaturenbrett ansteuert.

Der Indikator 51 ist axial zwischen einerseits dem zweiten Beschlagteil 12 und andererseits dem Adapter 55 und dem Bedienhebel 5 angeordnet. Die Schaltfläche 51 s des Indikators 51 wirkt mit der Kontaktzunge 61 a des Sensors 61 zusammen. Befindet sich die Schaltfläche 51 s im Bereich der Kontaktzunge 61 a, so drückt die Schaltfläche 51s die Kontaktzunge 61 a radial nach innen gegen die Kontaktfläche 61 b und schließt den Stromkreis. Entfernt sich die Schaltfläche 51 s von der Kontaktzunge 61 a, so federt die Kontaktzunge 61 a radial nach außen und löst sich von der Kontaktfläche 61 b. Der Stromkreis ist dann unterbrochen.

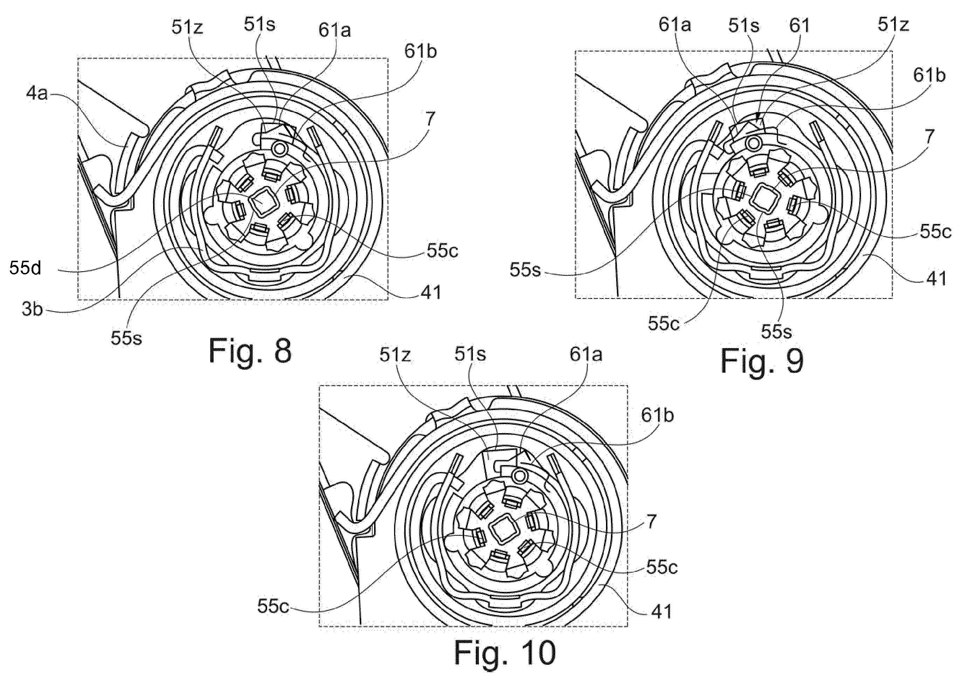

Die Winkellage des Zeigers 51 z des Indikators 51 und somit der Schaltfläche 51 s relativ zum sitzteilfesten zweiten Beschlagteil 12 ist abhängig vom Verriegelungszustand des Beschlags 10. In einer in Fig. 8 dargestellten Ausgangsstellung befindet sich der Beschlag 10 im verriegelten Zustand. Die Schaltfläche 51 s befindet sich in radialer Richtung oberhalb des Sensors 61 und drückt die Kontaktzunge 61 a gegen die Kontaktfläche 61 b. Der Stromkreis ist geschlossen.

Fig. 9 zeigt den betätigten Bedienhebel 5, der mit dem drehfest mit diesem verbundene Adapter 55 aus der Ausgangsstellung ausgelenkt ist und so den Befestigungsring 24 und folglich den Mitnehmer 21 dreht. Dadurch wird der Beschlag 10 entriegelt, so dass die Lehne 4 geschwenkt werden kann. Mit der Drehung des Adapters 55 erfolgt eine Drehung des an diesem befestigten Sensors 61 und auch des Indikators 51. Die Schaltfläche 51s betätigt weiterhin den Sensor 61, indem die Kontaktzunge gegen die Kontaktfläche 61 b gedrückt wird. Der Stromkreis bleibt geschlossen.

Wird der ausgelenkte Bedienhebel 5 losgelassen, so dreht die im Beschlag 10 enthaltene Federanordnung 35 den Exzenter 27 samt Mitnehmer 21 zurück, um damit die Riegel 16 zu beaufschlagen, damit der Beschlag 10 in den verriegelten Zustand gelangt. Der Mitnehmer 21 dreht seinen Befestigungsring 24 und damit den Indikator 51 zurück. Zudem dreht der besagte Befestigungsring 24 den Adapter 55, wodurch der ausgelenkte Bedienhebel 5 in die Ausgangsstellung zurückkehrt. Die Schaltfläche 51s betätigt weiterhin den Sensor 61, indem die Kontaktzunge gegen die Kontaktfläche 61 b gedrückt wird. Der Stromkreis bleibt geschlossen.

Wenn der Beschlag 10 - wie in Fig. 10 dargestellt - nicht verriegelt, beispielsweise weil die Riegel 16 und der Zahnkranz 17 "Zahn auf Zahn" stehen, so verhindern die radial nach innen gezogenen Riegel 16 ein Zurückdrehen des Exzenters 27 und des drehfest mit diesem verbundenen Mitnehmers 21. Der mit dem Befestigungsring 24 des Mitnehmers 21 verbundene Indikator 51 dreht somit nicht oder nicht vollständig zurück, während der Adapter 55 samt Sensor 61 durch die Rückstellfeder 71 und das Spiel S vollständig zurückgeschwenkt wird. Die Schaltfläche 51 s entfernt sich somit von der Kontaktzunge 61 a, die von der Kontaktfläche 61 b weg federt, so dass der Stromkreis unterbrochen wird und in zuvor beschriebener Weise eine Nichtverriegelungsanzeige aktiviert wird. Der Benutzer erkennt dadurch, dass die Ausgangsstellung noch nicht erreicht ist, d.h. der Beschlag 10 noch nicht im verriegelten Zustand ist und für ein korrektes Verriegeln noch Handlungsbedarf besteht. Die Stellung "Zahn auf Zahn" lässt sich durch eine minimale Schwenkbewegung (ca. 1°) der Lehne 4 auflösen.

In einer Abwandlung des Ausführungsbeispiels ist die Lehne 4 auf beiden Seiten der Fahrzeugsitzes 1 mit jeweils einem Beschlag 10 an dem Sitzeil 3 angelenkt. In diesem Fall kann auch der zweite Beschlag 10 eine entsprechende Sensierung der Nichtverriegelung aus Indikator 51 und Sensor 61 aufweisen. Die elektrischen Signale der beiden Sensierungen werden dann über eine Auswerteelektrik oder - elektronik ausgewertet. Bei Verwendung einer ODER-Verknüpfung wird der nicht verriegelte Zustand der Lehne 4 beispielsweise dann angezeigt, wenn einer der beiden Beschläge 10 nicht verriegelt ist.

In einer weiteren Abwandlung des Ausführungsbeispiels ist der Adapter 55 mit den zusätzlichen Funktionen eines Anschlagmoduls ausgebildet, wie dies beispielsweise aus der DE 10 2010 025 112 A1 bekannt ist. Die zentrale Öffnung 55d des Adapters 55 weist dazu eine Profilform auf, die zu dem Profil der Übertragungsstange 7 eine drehfeste Verbindung bildet. Der Adapter 55 steht dadurch in Wirkverbindung einerseits mit dem Bedienhebel 5 und andererseits mit der Übertragungsstange 7. In wenigstens einer Drehrichtung des Handhebels 5 wird dieser mit einem der Beschlagteile 11 oder 12 in Anschlag gebracht, indem Anschlaggeometrien des Adapters 55 mit Anschlaggeometrien eines der Beschlagteile 11 oder 12 zusammen wirken. Dadurch werden die inneren Bauteile des Beschlags vor Missbrauchskräften geschützt.

In den obigen Ausführungsbeispielen erfolgt eine Signalausgabe infolge des unterbrochenen Stromkreises immer dann, wenn der Beschlag 10 unverriegelt und der Bedienhebel 5 unbetätigt ist. Es ist in einer weiteren Abwandlung der Ausführungsbeispiele jedoch auch möglich, dass die Signalausgabe immer bei unverriegeltem Beschlag 10 und unabhängig von der Winkelstellung des Bedienhebels 5 erfolgt. Dazu muss in Umfangsrichtung ein Leerweg zwischen Bedienhebel 5 und Adapter 55 und/oder Adapter 55 und Befestigungsring 24 vorgesehen sein.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 3: Sitzteil
- 3a: Sitzteiladapter
- 3b: Federadapter
- 4: Lehne
- 4a: Abstützlasche
- 5: Bedienhebel
- 5a: Haken
- 5b: Einhängeloch
- 5c: Clipshaken
- 7: Übertragungsstange
- 7n: Nut
- 10: Beschlag
- 11: erstes Beschlagteil
- 12: zweites Beschlagteil
- 13: Umklammerungsring
- 14: Führungssegment
- 16: Riegel
- 17: Zahnkranz
- 21: Mitnehmer
- 21a: Profilloch
- 21s: Steg
- 24: Befestigungsring
- 24a: Außenprofil
- 24b: Bund
- 24c: Innenprofil
- 24d: Durchlass
- 24g: Rille
- 27: Exzenter
- 35: Federanordnung
- 36: Steuerscheibe
- 38: Nase
- 41: Lehnenkompenationsfeder
- 51: Indikator
- 51a: Profil
- 51s: Schaltfläche
- 51z: Zeiger
- 55: Adapter
- 55a: erster Cliphaken
- 55b: Zentrierarm
- 55c: zweiter Cliphaken
- 55d: zentrale Öffnung
- 55s: Profilsteg
- 61: Sensor
- 61a: Kontaktzunge
- 61b: Kontaktfläche
- 71: Rückstellfeder
- A: Achse
- S: Spiel

## Patentansprüche

1. Beschlag (10) für einen Fahrzeugsitz (1), insbesondere für einen Kraftfahrzeugsitz, mit
a) einem ersten Beschlagteil (11) und einem zweiten Beschlagteil (12), welche relativ zueinander um eine Achse (A) verdrehbar sind, wobei an dem ersten Beschlagteil (11) ein Zahnkranz (17) und an dem zweiten Beschlagteil (12) Führungssegmente (14) ausgebildet sind,
b) Riegeln (16), welche mittels der Führungssegmente (14) geführt zwischen einem verriegelten Zustand und einem entriegelten Zustand verschieblich sind, und welche im verriegelten Zustand mit dem Zahnkranz (17) zusammenwirken, um den Beschlag (10) zu verriegeln,
c) einem federbelasteten, drehbar gelagerten Exzenter (27), welcher die Riegel (16) beaufschlagt, um sie zum Zusammenwirken mit dem Zahnkranz (17) zu bringen,
d) einem drehbar gelagerten Mitnehmer (21) zum Drehen des Exzenters (27),
e) einem Indikator (51), der drehfest mit dem Mitnehmer (21) ) oder mit einem an dem Mitnehmer (21) befestigten Befestigungsring (24) verbunden ist und
f) einem mit dem Beschlag (10) verbundenen Sensor (61), der eine Positionsänderung des Indikators (51) erfasst und in ein elektrisches Ausgangssignal umwandelt,
wobei
g) ein mit einem Bedienhebel (5) verbundener Adapter (55) drehbar an dem Mitnehmer (21) oder an dem an dem Mitnehmer (21) befestigten Befestigungsring (24) gelagert ist,
h) der Adapter (55) mittels einer Rückstellfeder (71) unabhängig vom Verriegelungszustand des Beschlages (10) in eine Ausgangslage zurückgestellt wird, wenn der Bedienhebel (5) unbetätigt ist und
i) der Sensor (61) an dem Adapter (55) befestigt ist.

2. Beschlag (10) nach Anspruch 1, **dadurch gekennzeichnet, dass** die Riegel (16) zum Entriegeln des Beschlages von einer mit dem Exzenter (27) oder dem Mitnehmer (21) verbundenen Steuerscheibe (36) radial nach innen gezogen werden.

3. Beschlag (10) nach Anspruch 2, **dadurch gekennzeichnet, dass** ein Freischwenk-Steuerelement in einem bestimmten, einem Relativwinkelbereich der Beschlagteile (11, 12) entsprechenden Freischwenk-Winkelbereich, den Beschlag (10) am Verriegeln hindert.

4. Beschlag (10) nach einem der Ansprüche 1 bis 3, **dadurch gekennzeichnet, dass** der Exzenter (27) drehfest mit dem Mitnehmer (21) verbunden ist.

5. Beschlag (10) nach einem der Ansprüche 1 bis 4, **dadurch gekennzeichnet, dass** der Mitnehmer (21) oder der Befestigungsring (24) ein Außenprofil (24a) zum drehfesten Zusammenwirken mit einem Profil (51 a) des Indikators (51) aufweist.

6. Beschlag (10) nach einem der Ansprüche 1 bis 5, **dadurch gekennzeichnet, dass** der Mitnehmer (21) über eine Profilverbindung mit einer Übertragungsstange (7) verbunden ist, indem der Mitnehmer (21) in Entriegelungsrichtung von der Übertragungsstange (7) antreibbar ist und entgegen der Entriegelungsrichtung ein Spiel (S) in der Profilverbindung eine begrenzte Winkelbeweglichkeit zwischen dem Mitnehmer (21) und der Übertragungsstange (7) ermöglicht, wobei der Adapter (55) in beiden Richtungen drehfest mit der Übertragungsstange (7) verbunden ist.

7. Beschlag (10) nach Anspruch 6, **dadurch gekennzeichnet, dass** die Übertragungsstange (7) mindestens eine Nut (7n) aufweist, die mit mindestens einem Steg (21 s) des Mitnehmers (21) zusammenwirkt und das Spiel (S) zwischen der mindestens einen Nut (7n) und dem mindestens einem Steg (21s) vorgesehen ist.

8. Beschlag (10) nach einem der Ansprüche 1 bis 7, **dadurch gekennzeichnet, dass** der Adapter (55) mehrere Clipshaken (55a) aufweist, die einen Bund (24b) des Befestigungsringes (24) hintergreifen, wodurch der Adapter (55) in axialer Richtung fest und in Umfangsrichtung drehbar an dem Befestigungsring (24) gelagert ist.

9. Beschlag (10) nach einem der Ansprüche 1 bis 8, **dadurch gekennzeichnet, dass** der Indikator (51) axial zwischen einerseits dem zweiten Beschlagteil (12) und andererseits dem Adapter (55) angeordnet ist.

10. Beschlag (10) nach einem der Ansprüche 1 bis 9, **dadurch gekennzeichnet, dass** in wenigstens einer Drehrichtung des Bedienhebels (5) mindestens eine Anschlaggeometrie des Adapters (55) mit mindestens einer Anschlaggeometrie eines der Beschlagteile (11, 12) zusammenwirkt und dadurch den Drehwinkel begrenzt.

11. Beschlag (10) nach einem der Ansprüche 1 bis 10, **dadurch gekennzeichnet, dass** der Sensor (61) eine federnde und elektrisch leitfähige Kontaktzunge (61 a) und eine elektrisch leitfähige Kontaktfläche (61 b) umfasst.

12. Beschlag (10) nach Anspruch 11, **dadurch gekennzeichnet, dass** die Kontaktzunge (61 a) als Insert-Lösung in den Adapter (55) integriert ist.

13. Beschlag (10) nach Anspruch 12, **dadurch gekennzeichnet, dass** der Sensor vollständig als Insert-Lösung in den Adapter (55) integriert ist.

14. Beschlag (10) nach einem der Ansprüche 11 bis 13, **dadurch gekennzeichnet, dass** bei verriegeltem Beschlag eine Schaltfläche (51s) des Indikators (51) die Kontaktzunge (61 a) auf die Kontaktfläche (61 b) drückt und dadurch einen Stromkreis schließt.

15. Fahrzeugsitz (1), insbesondere Kraftfahrzeugsitz, mit wenigstens einem Beschlag (10) nach einem der Ansprüche 1 bis 14 und einer Nichtverriegelungsanzeige, **dadurch gekennzeichnet, dass** der Anzeigezustand der Nichtverriegelungsanzeige durch das elektrische Ausgangssignal des Sensors (61) geschaltet wird.

## Claims

1. A fitting (10) for a vehicle seat (1), in particular for a motor vehicle seat, having
a) a first fitting part (11) and a second fitting part (12) which are rotatable relative to one another about an axis (A), wherein a toothed ring (17) is formed on the first fitting part (11) and guide segments (14) are formed on the second fitting part (12),
b) catches (16) which, guided by means of the guide segments (14), are displaceable between a locked state and an unlocked state, and which, in the locked state, interact with the toothed ring (17) in order to lock the fitting (10),
c) a spring-loaded, rotatably mounted eccentric (27) which acts on the catches (16) in order to cause them to interact with the toothed ring (17),
d) a rotatably mounted driver (21) for rotating the eccentric (27),
e) an indicator (51) which is connected rotationally conjointly to the driver (21) or to a fastening ring (24) which is fastened to the driver (21), and
f) a sensor (61) which is connected to the fitting (10) and by means of which a change in position of the indicator (51) is detected and converted into an electrical output signal,
wherein
g) an adapter (55) which is connected to an operating lever (5) is mounted rotatably on the driver (21) or on the fastening ring (24) that is fastened to the driver (21),
h) the adapter (55) is returned into an initial position by means of a return spring (71) when the operating lever (5) is unactuated, regardless of the locking state of the fitting (10), and
i) the sensor (61) is fastened to the adapter (55).

2. The fitting (10) as claimed in claim 1, **characterized in that** the catches (16) are pulled radially inward by a control disk (36), which is connected to the eccentric (27) or to the driver (21), in order to unlock the fitting.

3. The fitting (10) as claimed in claim 2, **characterized in that** a pivoting-free control element, in a certain pivoting-free angle range which corresponds to a relative angle range of the fitting parts (11, 12), prevents the fitting (10) from locking.

4. The fitting (10) as claimed in one of claims 1 to 3, **characterized in that** the eccentric (27) is connected rotationally conjointly to the driver (21).

5. The fitting (10) as claimed in one of claims 1 to 4, **characterized in that** the driver (21) or the fastening ring (24) has an external profile (24a) for rotationally conjoint interaction with a profile (51a) of the indicator (51).

6. The fitting (10) as claimed in one of claims 1 to 5, **characterized in that** the driver (21) is connected by means of a profiled connection to a transmission rod (7), while the driver (21) can be driven by the transmission rod (7) in an unlocking direction and, counter to the unlocking direction, a degree of play (S) in the profiled connection permits limited angular mobility between the driver (21) and the transmission rod (7), wherein the adapter (55) is connected to the transmission rod (7) for conjoint rotation in both directions.

7. The fitting (10) as claimed in claim 6, **characterized in that** the transmission rod (7) has at least one groove (7n) which interacts with at least one web (21s) of the driver (21), and the play (S) is provided between the at least one groove (7n) and the at least one web (21s).

8. The fitting (10) as claimed in one of claims 1 to 7, **characterized in that** the adapter (55) has multiple clip hooks (55a) which engage behind a collar (24b) of the fastening ring (24), whereby the adapter (55) is mounted fixedly in the axial direction and rotatably in the circumferential direction on the fastening ring (24).

9. The fitting (10) as claimed in one of claims 1 to 8, **characterized in that** the indicator (51) is arranged axially between the second fitting part (12) at one side and the adapter (55) at the other side.

10. The fitting (10) as claimed in one of claims 1 to 9, **characterized in that**, in at least one direction of rotation of the operating lever (5), at least one abutment geometry of the adapter (55) interacts with at least one abutment geometry of one of the fitting parts (11, 12), and thereby limits the angle of rotation.

11. The fitting (10) as claimed in one of claims 1 to 10, **characterized in that** the sensor (61) comprises a resilient and electrically conductive contact tongue (61a) and an electrically conductive contact surface (61b).

12. The fitting (10) as claimed in claim 11, **characterized in that** the contact tongue (61a) is integrated, as an insert solution, into the adapter (55).

13. The fitting (10) as claimed in claim 12, **characterized in that** the sensor is integrated entirely as an insert solution into the adapter (55).

14. The fitting (10) as claimed in one of claims 11 to 13, **characterized in that**, when the fitting is locked, a switching surface (51s) of the indicator (51) presses the contact tongue (61a) against the contact surface (61b) and thereby closes an electrical circuit.

15. A vehicle seat (1), in particular motor vehicle seat, having at least one fitting (10) as claimed in one of claims 1 to 14, and having an unlocked-state display, **characterized in that** the display state of the unlocked-state display is switched by means of the electrical output signal of the sensor (61).

## Revendications

1. Ferrure (10) pour un siège de véhicule (1), en particulier pour un siège de véhicule automobile, avec
a) une première partie de ferrure (11) et une deuxième partie de ferrure (12) qui peuvent tourner autour d'un axe (A) l'une par rapport à l'autre, une couronne dentée (17) étant constituée sur la première partie de ferrure (11) et des segments de guidage (14) étant constitués sur la deuxième partie de ferrure (12),
b) des verrous (16), qui peuvent être déplacés au moyen des segments de guidage (14) guidés entre un état verrouillé et un état déverrouillé et qui coopèrent à l'état verrouillé avec la couronne dentée (17) pour verrouiller la ferrure (10),
c) un excentrique (27) à ressort, logé pouvant tourner, qui sollicite les verrous (16) pour les faire coopérer avec la couronne dentée (17),
d) un élément d'entraînement (21) logé pouvant tourner pour faire tourner l'excentrique (27),
e) un indicateur (51), qui est relié de manière solidaire en rotation avec l'élément d'entraînement (21) ou avec un anneau de fixation (24) fixé à l'élément d'entraînement (21), et
f) un capteur (61) relié à la ferrure (10), qui saisit un changement de position de l'indicateur (51) et le transforme en un signal de sortie électrique,
g) un adaptateur (55) relié à un levier de commande (5) étant logé pouvant tourner sur l'élément d'entraînement (21) ou sur l'anneau de fixation (24) fixé à l'élément d'entraînement (21),
h) l'adaptateur (55) étant remis dans une position initiale au moyen d'un ressort de rappel (71) indépendamment de l'état de verrouillage de la ferrure (10), si le levier de commande (5) n'est pas actionné, et
i) le capteur (61) étant fixé à l'adaptateur (55) .

2. Ferrure (10) selon la revendication 1, **caractérisée en ce que** les verrous (16) sont tirés radialement vers l'intérieur par un plateau de commande (36) relié à l'excentrique (27) ou l'élément d'entraînement (21) pour déverrouiller la ferrure.

3. Ferrure (10) selon la revendication 2 **caractérisée en ce qu'**un élément de commande à pivotement libre arrête la ferrure (10) en verrouillage dans une certaine zone angulaire de pivotement libre correspondant à une zone angulaire relative des pièces de ferrure (11,12).

4. Ferrure (10) selon l'une quelconque des revendications 1 à 3 **caractérisée en ce que** l'excentrique (27) est relié de manière solidaire en rotation avec l'élément d'entraînement (21).

5. Ferrure (10) selon l'une quelconque des revendications 1 à 4 **caractérisée en ce que** l'élément d'entraînement (21) ou l'anneau de fixation (24) comporte un profilé extérieur (24a) pour l'action conjointe solidaire en rotation avec un profilé (51a) de l'indicateur (51).

6. Ferrure (10) selon l'une quelconque des revendications 1 à 5 **caractérisée en ce que** l'élément d'entraînement (21) est relié à une tige de transmission (7) par un raccord profilé, l'élément d'entraînement (21) pouvant être actionné dans la direction de déverrouillage de la tige de transmission (7), et à l'opposé de la direction de déverrouillage, un jeu (S) dans le raccord profilé permettant une mobilité angulaire limitée entre l'élément d'entraînement (21) et la tige de transmission (7), l'adaptateur (55) étant relié dans les deux directions de manière solidaire en rotation avec la tige de transmission (7).

7. Ferrure (10) selon la revendication 6 **caractérisée en ce que** la tige de transmission (7) comporte au moins une rainure (7n) qui coopère avec au moins une nervure (21s) de l'élément d'entraînement (21) et le jeu (S) est prévu entre l'au moins une rainure (7n) et l'au moins une nervure (21s).

8. Ferrure (10) selon l'une quelconque des revendications 1 à 7 **caractérisée en ce que** l'adaptateur (55) comporte plusieurs crochets d'agrafage (55a) qui viennent en prise en arrière avec un collet (24b) de l'anneau de fixation (24), l'adaptateur (55) étant de ce fait logé de manière fixe dans la direction axiale et de manière solidaire en rotation dans la direction périphérique sur l'anneau de fixation (24).

9. Ferrure (10) selon l'une quelconque des revendications 1 à 8 **caractérisé en ce que** l'indicateur (51) est disposé axialement entre d'une part la deuxième partie de ferrure (12) et d'autre part l'adaptateur (55).

10. Ferrure (10) selon l'une quelconque des revendications 1 à 9 **caractérisée en ce que** dans au moins un sens de rotation du levier de commande (5) au moins une géométrie de butée de l'adaptateur (55) coopère avec au moins une géométrie de butée d'une des parties de ferrure (11,12) et limite de ce fait l'angle de rotation.

11. Ferrure (10) selon l'une quelconque des revendications 1 à 10 **caractérisée en ce que** le capteur (61) comprend une languette de contact (61a) élastique et électroconductrice et une surface de contact électroconductrice (61b).

12. Ferrure (10) selon la revendication 11 **caractérisée en ce que** la languette de contact (61a) est intégrée dans l'adaptateur (55) en tant que solution d'insertion.

13. Ferrure (10) selon la revendication 12 **caractérisée en ce que** le capteur est complètement intégré dans l'adaptateur (55) en tant que solution d'insertion.

14. Ferrure (10) selon l'une quelconque des revendications 11 à 13 **caractérisée en ce qu'**avec la ferrure verrouillée, une surface de commutation (51s) de l'indicateur (51) appuie la languette de contact (61a) sur la surface de contact (61b) et ferme de ce fait un circuit de courant.

15. Siège de véhicule (1), en particulier siège de véhicule automobile, avec au moins une ferrure (10) selon l'une quelconque des revendications 1 à 14 et une indication de non verrouillage, **caractérisé en ce que** l'état d'indication de l'indication de non verrouillage est connecté par le signal de sortie électrique du capteur (61).
